# EUROPÄISCHE PATENTSCHRIFT

(11) **EP 0 554 285 B1**
(45) Veröffentlichungstag und Bekanntmachung des Hinweises auf die Patenterteilung: **14.09.1994**
(21) Anmeldenummer: 91918013.3
(22) Anmeldetag: 22.10.1991
(51) Int. Cl.: D21F 1/66

(54) **VERFAHREN ZUR RÜCKGEWINNUNG VON ROHSTOFFEN AUS DEM MECHANISCHEN RESTABWASSERSCHLAMM DER PAPIERINDUSTRIE**
PROCESS FOR RECOVERING RAW MATERIALS FROM PAPER-INDUSTRY MECHANICAL WASTE SLUDGES
PROCEDE POUR LA RECUPERATION DE MATIERES PREMIERES A PARTIR DE LA BOUE DES EAUX RESIDUELLES DE L'INDUSTRIE DU PAPIER TRAITEES PAR LE PROCEDE MECANIQUE

(30) Priorität: 26.10.1990 DE 4034054
(43) Veröffentlichungstag der Anmeldung: 11.08.1993
(73) Patentinhaber: Stora Feldmühle Aktiengesellschaft, 40545 Düsseldorf (DE); OMYA GmbH, 50968 Köln (DE)
(72) Erfinder: TEMPLER, Klaus, W-2082 Heidgraben (DE); JACOBS, Günther, W-4005 Meerbusch 1 (DE); TEGETHOFF, Wolfgang, W-5000 Köln 51 (DE)
(86) Internationale Anmeldenummer: EP9102003
(87) Internationale Veröffentlichungsnummer: WO9208001

(56) Entgegenhaltungen:
- DE-A- 2 836 186
- DE-A- 2 946 160
- US-A- 3 833 468

## Beschreibung

Die Erfindung betrifft ein Verfahren nach dem Gattungsbegriff des Anspruches 1.

Rückgewinnungsverfahren für Papierfasern, Füll- und Streichpigmenten aus den Kreisläufen der Papierindustrie sind an sich bekannt.

Die deutsche Literaturstelle "Handbuch der Papier- und Pappenfabrikation (Papierlexikon), Dr. Martin Sändig oHG, Niederwalluf, 1971, berichtet ausführlich unter den Stichworten Abwasserreinigung, Faserrückgewinnung, Schlammaufbereitung und Stoffänger. Unter den Rückgewinnungsverfahren mit Hilfe der Stoffänger haben sich drei unterschiedliche Wirkungsweisen seit langer Zeit durchgesetzt: die Sedimentation in sog. Trichter- oder Kratzerkläranlagen, die Filtration mit oder ohne Filterhilfsstoffen auf Trommelfiltern und schließlich die Flotation. Die ersten beiden verfahren werden zur Rückgewinnung von Fasern und Füllstoffen herangezogen, während die Flotation bis auf wenige Ausnahmen hauptsächlich der Rückgewinnung der brauchbaren Faserbestandteile diente.

Alle Rückgewinnungsverfahren sind auf die Entstoffung an sich wenig verschmutzter Kreisläufe gerichtet, da der Wiedereinsatz des aus Faser- und Füllstoff bestehenden sog. Fang- oder Dickstoffes in den Papierherstellungsprozeß einen höheren Schmutzanteil verbietet. Dies trifft insbesondere bei sog. Feinpapieren zu, die einen hohen Weißgehalt und eine minimale Schmutzpunktzahl erfordern.

Gemäß dem Stand der Technik ist es daher üblich, die sog. Papiermaschinenkreisläufe II oder III einem Stoffänger zuzuführen, während alle Leckagenabläufe, Bodenentwässerungen und sonstigen diffusen Verluste einer Papierfabrik über den sog. Kanal der Restabwasserreinigung zugeführt werden, wo die mechanische und ggf. biologische Reinigung stattfindet. Der dort anfallende Schlamm ist erheblich mit Schmutzpartikeln durchsetzt, so daß sich ein Wiedereinsatz für höherwertige Papiere von selbst verbietet.

Bei ordnungsgemäßem Betrieb der Papierfabrik ist es zwar möglich, die unerwünschten Verluste an Fasern, insbesondere hochwertigen Primärfasern und Füllstoffen, auf ein Mindestmaß zu reduzieren, es treten jedoch bei Störungen oder Havarien Verluste über den Kanal auf, die bis zu 20 % der täglichen Bruttomaschinenerzeugung betragen und wegen der starken Verschmutzung verworfen werden müssen.

Die DE-A-29 46 160 beschreibt schließlich die Rückgewinnung brauchbarer Faserstoffe aus den Abgängen einer Altpapieraufbereitung mit Flotationsstufe. Dabei wird der flotierte Abgang mit Hilfe einer Hydrozyklon-Separatoranlage in eine faserreiche Fraktion und in eine hydrophobe Leichtfraktion aufgetrennt. Die Faserfraktion wird daran anschließend nach einer weiteren Siebung der primären Flotation wieder zugeführt, während die hydrophobe Leichtfraktion und der Siebdurchgang verworfen wird. Eine Rückgewinnung an sich brauchbarer Füllstoffe und Pigmentteilchen findet bei diesem Verfahren nicht statt.

Aufgabe der Erfindung ist es daher, ein Verfahren zur Verfügung zu stellen, das es erlaubt, die im Restabwasserschlamm der mechanischen Kläranlage enthaltenen brauchbaren Fasern und Füllstoffe zurückzugewinnen, ohne daß die oben geschilderten Einschränkungen in Kauf genommen werden müssen.

Die Aufgabe wird durch den kennzeichnenden Teil des Anspruches 1 in Verbindung mit dem Gattungsbegriff gelöst. Weitere vorteilhafte Ausführungen des Verfahrens sind in den Unteransprüchen angegeben.

Das der Restabwasserkläranlage über den Kanal zugeführte Abwasser wird zunächst in an sich bekannter Weise einer mechanischen Sedimentation, ggf. unter Zuhilfenahme von Flockungsmitteln, unterworfen. Aus dem Schlammsammelraum wird anschließend kontinuierlich oder diskontinuierlich der Dünnschlamm mittels an sich bekannter Vorrichtungen abgezogen und dessen Konsistenz mit Hilfe üblicher Stoffdichtemeßgeräte ermittelt. Ist diese größer als 5 Gew.% Trockengehalt, so wird der Dünnschlamm durch Zumischen von mechanisch geklärtem Restabwasser auf eine Konsistenz von 1 bis 5 Gew.% eingestellt. Niedrigere Konsistenzen bedingen sehr große Volumina, während Konsistenzen oberhalb von 5 Gew.% zu rheologischen Problemen mit der Gefahr der Verstopfung in den nachgeschalteten Behandlungsaggregaten führen. Neben der automatisierten Konsistenzermittlung kann diese auch nach den üblichen Abwasseruntersuchungsmethoden ermittelt werden. Dies empfiehlt sich auch zur Überprüfung und Eichung der automatisierten Konsistenzermittlung.

Nach der Konsistenzeinstellung wird zwecks Abscheidung des Grobschmutzanteils, der aus Splittern, Sandkörnern und sonstigen Unreinheiten besteht, die homogenisierte Suspension über ein Sieb mit einer Maschenweite von 1 bis 2 mm geleitet. Bewährt haben sich hierfür selbstreinigende Bogensiebe oder mechanisch angetriebene Schwingsiebe. Der abgetrennte Grobschmutzanteil wird verworfen. Der Siebdurchgang besteht aus Fasern, Füllstoffen, Pigmenten, Feinsand, Schwarzpartikeln und Agglomeraten aus Füllstoff und Pigmenten oder Pigmenten, Fasern und Füllstoff. Unter Füllstoff werden dabei die in der Papiermasse eingesetzten feinen Teilchen verstanden, unter Pigment werden die in der Streichfarbe eingesetzten feinen Teilchen verstanden.

Die nicht brauchbaren Schwarzpartikel weisen eine Korngröße von > 10 µm auf. Sie bestehen in der Hauptsache aus grau bis schwarz gefärbtem Sand, Bodenabrieb, Maschinenabrieb, verkokten Schmiermitteln, sauer attakierten organischen Teilchen, Rost und agglomeriertem Staub oder eine Mischung daraus.

Das Abscheiden dieser Schwarzpartikel gelingt mittels Zentrifugieren in einen oder mehreren parallel oder hintereinandergeschalteten Hydrozyklonen. Da ein Hydrozyklon sowohl nach Dichteunterschied als auch nach Formfaktor klassiert, erfolgt zusätzlich die Abscheidung großvolumiger, stabiler Pigmentagglomerate, Faserklumpen sowie feiner Holzsplitter, die für die Rückgewinnung unerwünscht sind.

Bei Hintereinanderschaltung mehrerer Hydrozyklone und Zuführung des Unterlaufes zu einem weiteren Hydrozyklon wird der Gutstoffverlust minimiert und der Gutstoffanteil im Hydrozyklonüberlauf angereichert.

Als Hydrozyklon können alle marktgängigen Typen eingesetzt werden. Wegen der Abrasivität des Schwarzpartikelanteils haben sich Hydrozyklone aus hartem, korrosionsfestem Werkstoff, wie Oxidkeramik, bewährt.

Bevorzugt werden sog. Kleinsthydrozyklone mit einem Nenndurchmesser von 10 bis 100 mm, einem Gutstoffdüsendurchmesser von 7 bis 14 mm und einem Unterlaufdüsendurchmesser von 2 bis 8 mm eingesetzt. Der Beschickungsdruck der Hydrozyklone wird zwischen 0,5 und 6 bar ausgewählt. Höhere Drucke ergeben keine Vorteile.

Bei einer bevorzugten Ausführung des Verfahrens wird der in den Hydrozyklonen abgeschiedene Schwarzpartikelanteil einer zusätzlichen Feinsiebung mit einer Siebmaschenweite von > als 25 µm, insbesondere 63 µm, unterzogen und der Siebdurchgang dem Gutstoffanteil zugeführt. Der Siebdurchgang kann alternativ aber auch wieder vor den oder die Hydrozyklone zurückgeführt werden, um die Abscheiderate für die Schwarzpartikel, die sich noch im Siebdurchgang befinden, zu erhöhen. Mit dieser Maßnahme ist es möglich, den Anteil an zurückgewonnenem Gutstoff aus Faser-, Füllstoff und Pigmentanteil weiter zu erhöhen.

Wie oben bereits angedeutet, klassiert der Hydrozyklon neben dem Formfaktor nach dem Dichteunterschied. Wenn der Anteil der abzuscheidenden Schwarzpartikel mit einer Dichte nahe 1,0 groß ist, gelingt deren Abtrennung nur mäßig. Eine wesentliche Verbesserung gelingt dann durch die Dichteerniedrigung des Suspensionsmediums. In einem bevorzugten Verfahren wird daher dem auf den Hydrozyklon aufzugebenden Suspensionsstrom Luft/Gas als Verdünnungsmedium beigemischt, wobei der Luft-/Gas-Anteil auf 0 bis 45 Vol.% eingestellt wird. Die Einmischung des Luft-/Gas-Anteils erfolgt dabei nach an sich bekannter Technik mittels Volumenstrommessung und Dispergiervorrichtung statisch oder mechanisch. Dazu können aus der Flotationstechnik bekannte Vorrichtungen, wie Strahldüsen oder Stator-Rotor-Maschinen herangezogen werden.

Soll zusätzlich die Flockenstruktur der Suspension, die auch Agglomerate enthält, für eine gezielte Auftrennung beeinflußt werden, kann dies ebenfalls durch mechanische Dispergierung oder durch mechanisch-chemische Dispergierung unter Zuhilfenahme eines an sich bekannten chemischen Dispergiermittels erfolgen. Als Vorrichtung für die mechanische Dispergierung können Stator-Rotor-Maschinen eingesetzt werden. Insbesondere hat sich eine sogenannte Dispergierpumpe gemäß der EP-B-0118 027 bewährt, bei der saugseitig zusätzlich das chemische Dispergiermittel dosiert werden kann.

Der für die mechanische Dispergierung erforderliche Arbeitsaufwand wird zwischen 0,2 und 3,0 kwh/m³ Suspension, gemessen an der Leistungsaufnahme des Arbeitsmotors, ausgewählt. Mit Hilfe dieses Verfahrensschrittes können aus der Suspension bis zu 97 % des Schwarzpartikelanteils entfernt werden.

Der von dem/den Hydrozyklonen abgegebene Gutstoffanteil besteht nunmehr nur noch aus den Füllstoffen, Pigmenten, Faserstoffen und Agglomeraten. Um diese auf den ursprünglich hohen Einsatzqualitätsstandard rückführen zu können, ist ein weiterer Verfahrensschritt notwendig, der aus dem fraktionierenden Feinsieben besteht. Als Ergebnis dieser Feinsiebung werden einerseits die für die Papiererzeugung wieder einsetzbaren Fasern und faserbruchstücke und andererseits die Füllstoffe und Pigmente zurückgewonnen. Der Faserschleim und die nicht dispergierten Agglomeratreste werden verworfen.

Als Siebsysteme für die Faserabscheidung werden entweder geschlossene Systeme, wie sie auch unter der Bezeichnung Drucksortierer in der Papierindustrie bekannt sind, oder halboffene Schwingsiebsysteme mit Sieblochweiten bzw. Maschenweiten von 37 bis 300 µm verwendet. Die von den Fasern befreite Suspension wird direkt daran anschließend einer weiteren Feinsiebung zur Abscheidung der Agglomeratreste mittels Sieben mit Maschenweite > 45 µm zugeführt. Faserabsiebung und Agglomeratabsiebung kann direkt in einem Gerät erfolgen, wenn die Siebe unmittelbar hintereinander angeordnet werden und separate Abzugsvorrichtungen vorgesehen werden. Die zur Siebung erforderlichen Feststoffgehalte entsprechen direkt dem des Gutstoffablaufs der letzten Hydrozyklonstufe. Soll jedoch der Feststoffgehalt vor der Siebung erniedrigt werden bzw. eine zusätzliche Wäsche der abgesiebten Fasern erfolgen, wie beispielsweise eine Hochdruckbedüsung am halboffenen Schwingsieb, kann dazu Klarwasser der Kläranlage oder auch Frischwasser herangezogen werden. Je nach Erfordernis kann der Trockengehalt der abgesiebten Fasern entsprechend der späteren Verwendung durch weitere Entwässerungsmaßnahmen erhöht werden.

Der Siebdurchgang durch das 45 µm-Sieb besteht ausschließlich aus Füllstoffen und Pigmenten, die ggf. in benötigter Konzentration dem Produktionsprozeß in hoher Reinheit wieder zugeführt werden können.

Sofern in der Papierfabrik gestrichene Papiere hergestellt oder verarbeitet werden, setzt sich das zurückgewonnene Füllstoff- und Pigmentgemisch aus relativ groben Füllstoffen und feinen Streichpigmenten zusammen, wobei beide Klassen wiederum aus Kaolin, Calciumcarbonat, Titandioxid und weiteren an sich bekannten Rohstoffen bestehen können. Es ist daher erwünscht, eine weitere Auftrennung durchzuführen, um die sehr teuren Streichpigmente für die Verwendung für die Streicherei separat zurückzugewinnen, während die Füllstoffe einer generellen Verwendung zugeführt werden. In einem bevorzugten Verfahrensschritt wird daher die Pigmentfraktion der Feinsiebung einer mehrstufigen Flotation unterzogen. Ziel dieser Flotation ist die Trennung nach Korngrößenverteilung und Pigmentart durchzuführen um eine generelle Verwendung zu gewährleisten. Die dazu notwendigen Maßnahmen und Geräte sind in der DE-A-39 00 940, DE-A-39 00 941 sowie EP-A-0 291 271, auf die hier Bezug genommen wird, ausführlich beschrieben.

Bei einer weiteren bevorzugten Ausführung des Verfahrens wird der Faser-, Füllstoff- und Pigmentanteil einzeln oder in Mischung einer Bleich- und Konservierungsbehandlung mittels Zugabe von oxidierenden Bleichmitteln unterzogen. Als solche haben sich Sauerstoffverbindungen, wie atomarer oder molekularer Sauerstoff, Ozon, Chlordioxid, Peroxidverbindungen, insbesondere aber Wasserstoffperoxid in einer Menge von 0,1 bis 2,0 % wirksames Bleichagens, bezogen auf atro Feststoff, bewährt. Die gasförmigen Bleichmittel werden dabei am Beginn einer längeren geschlossenen Rohrleitung dosiert, während pulverförmige und flüssige Peroxidverbindungen ohne weiteres, z. B. in offene Pumpenvorlagenbehälter dosiert werden können.

Die Konservierungsbehandlung unter Zugabe von Sauerstoff kann auch in einem Rohreaktor unter Anwendung von Wärme und Druck erfolgen. Dabei werden dann gleichzeitig in der Suspension gelöste organische Verbindungen zu Wasser und Kohlendioxid abgebaut. Eine derartige Behandlung ist unter dem Nemen "Zimpro-Verfahren" bekannt.

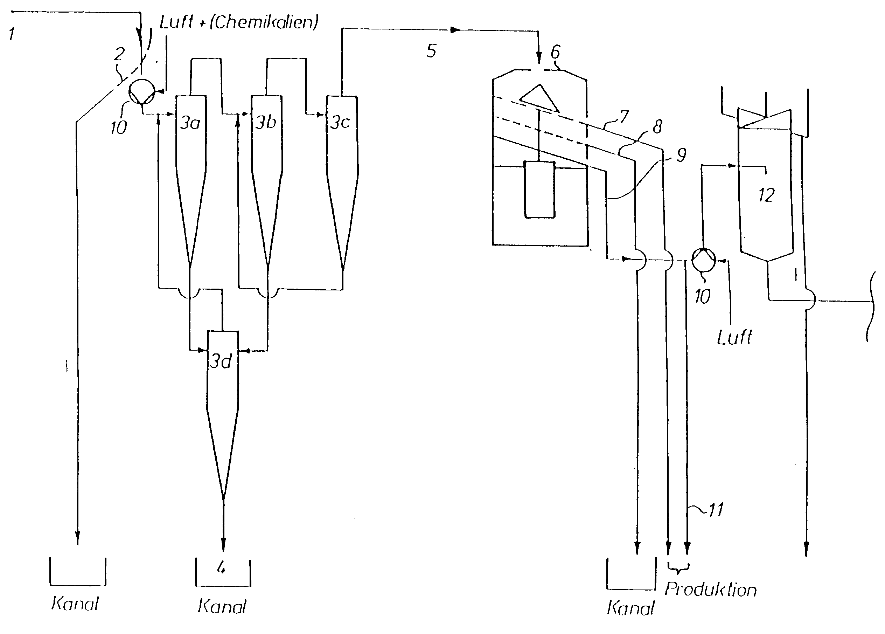

Das erfindungsgemäße Verfahren wird anhand der Abbildung 1, die eine systematische Darstellung zeigt, näher erläutert.

Der Dünnschlamm (1) wird ggf. nach Konsistenzeinstellung dem Bogensieb (2) zur Abscheidung der groben Verschmutzungen zugeführt. Der Siebdurchgang des Bogensiebes wird mittels der Dispergierpumpe (10) zu den Hydrozyklonen gefördert. Die Hydrozyklone (3a) bis (3d) sind in Reihe geschaltet, wobei der Unterlauf von Hydrozyklon (3a) und (3b) einem weiteren Hydrozyklon (3d) zur Nachsortierung zugeführt wird. Die Ausschleusung der Schwarzpartikel (4) erfolgt über Hydrozyklon (3d) mit hohem Wirkungsgrad.

Der Gutstoff von Hydrozyklon (3c) wird ggf. nach Einstellung der Konzentration durch Wasserzugabe bei (5) der Feinsiebung (6) zugeführt, die die Abscheidung der Fasern (7), der Agglomerate (8) und der Füllstoffe und Pigmente (9) in einer Vorrichtung vereinigt. Die Agglomerate (8) werden verworfen oder einer nicht dargestellten Dispergiervorrichtung zur weiteren Verarbeitung zugeführt.

Die Füllstoffe und Pigmente (9) werden entweder einer Entwässerung (11) oder zur weiteren Aufteilung über eine weitere Dispergierpumpe (10) mit Lufteinmischung der
Pigmentflotation (12), von der nur eine Zelle dargestellt ist, zugeleitet.

Das vorbeschriebene Verfahren eignet sich auch für die Aufarbeitung von aus Füll- und Faserstoff bestehenden Abwasserschlämmen oder Faserstoffsuspensionsteilströmen der Altpapier verarbeitenden Papierindustrie bei der Aufbereitung von Altpapier aus der Stufe der Entaschung, wo besonders großer Wert auf eine sortenreine und korngrößenspezifische Auftrennung der Füllstoffe und Pigmente gelegt wird, um diese zwecks Verbesserung der zu erzeugenden Papierqualität den entsprechenden Qualitätsvorschriften der Papiermaschine anzupassen.

## Patentansprüche

1. Verfahren zur Rückgewinnung von Rohstoffen für die Papier-, Pappe- und Kartonherstellung aus dem Restabwasserschlamm einer mechanischen Kläranlage oder Abscheidevorrichtung mittels Trennung in einen faserreichen Teil und einen füllstoffreichen Teil, gekennzeichnet durch die Kombination folgender Maßnahmen:
a) Einstellen des Feststoffgehaltes des Dünnschlammes auf einen Wert von 1 bis 5 Gew.% mittels Zugabe von mechanisch geklärtem Abwasser und Bereitstellen einer homogenisierten Suspension,
b) Abscheiden der Grobschmutzanteile mittels eines Siebes mit 1 bis 2 mm Maschenweite,
c) Abscheiden des Schwarzpartikelanteils > 10 µm mittels Zentrifugieren in einem oder mehreren parallel oder hintereinandergeschalteten Hydrozyklonen,
d) Fraktioniertes Feinsieben des Gutanteils des/der Hydrozyklone mit der Aufteilung in Faseranteil, Agglomeratanteil und Füllstoff- und Pigmentanteil,
e) Rückführung des Faseranteils und des Füllstoff- und Pigmentanteils in die Rohstoffaufbereitung der Papierfabrik.

2. Verfahren nach Anspruch 1, dadurch gekennzeichnet, daß für das Zentrifugieren Hydrozyklone mit einem Nenndurchmesser von 10 bis 100 mm, einem Gutstoffdüsendurchmesser von 7 bis 14 mm und einem Unterlaufdüsendurchmesser von 2 bis 8 mm ausgewählt werden.

3. Verfahren nach Anspruch 1 und 2, dadurch gekennzeichnet, daß der Einlaufdruck auf der Beschickungsseite des/der Hydrozyklone zwischen 0,5 und 6 bar ausgewählt wird.

4. Verfahren nach einem der Ansprüche 1 bis 3, dadurch gekennzeichnet, daß der in den Hydrozyklonen abgeschiedene Schwarzpartikelanteil einer zusätzlichen Feinsiebung mit einer Siebmaschenweite von > als 25 µm unterzogen wird und der Siebdurchgang dem Gutanteil zugeführt wird.

5. Verfahren nach einem der Ansprüche 1 bis 3, dadurch gekennzeichnet, daß die zu zentrifugierende Suspension vor Aufgabe auf den/die Hydrozyklone zusätzlich belüftet/begast wird.

6. Verfahren nach Anspruch 4, dadurch gekennzeichnet, daß der Luft-/Gas-Anteil der Suspension auf 0 bis 45 Vol.% eingestellt wird.

7. Verfahren nach Anspruch 1, dadurch gekennzeichnet, daß zum Zerteilen des Agglomeratanteils dieser mit einer Energie von 0,2 bis 3 kwh/m³ Suspension behandelt wird.

8. Verfahren nach Anspruch 1, dadurch gekannzeichnet, daß für das fraktionierte Feinsieben zum Abscheiden der Fasern Siebe mit einer Loch- oder Maschenweite von 80 bis 300 µm und für das Abscheiden der Agglomerate Siebe mit einer Maschenweite von > 45 µm ausgewählt werden.

9. Verfahren nach Anspruch 1, dadurch gekennzeichnet, daß der abgetrennte Füllstoff- und Pigmentanteil mit Hilfe an sich bekannter Flotationsverfahren in kaolinhaltige, oxidische und karbonatische Pigmente aufgetrennt wird.

10. Verfahren nach Anspruch 1, dadurch gekennzeichnet, daß der Faser-, Füllstoff- und Pigmentanteil einzeln oder zusammen einer Bleich- und Konservierungsbehandlung mittels Zugabe von oxidierenden Bleichmitteln unterzogen wird.

## Claims

1. Process for recovering raw materials for the manufacture of paper, paperboard and cardboard from the waste sludge from a mechanical clarification plant or separating device by means of separation into a fibre-rich part and a filler-rich part, characterised by the combination of the following measures:
a) adjustment of the solids content of the thin sludge to a value of from 1 to 5% by weight by the addition of mechanically clarified waste water and the preparation of a homogenised suspension,
b) separating-out of the coarse dirt portions by means of a screen having a mesh size of 1 to 2 mm,
c) separating-out of the black particle portion > 10 µm by centrifuging in one or more hydrocyclones connected parallel to or one after the other,
d) fractionated fine screening of the material portion from the hydrocyclone(s) with division into fibre portion, agglomerate portion and filler and pigment portion,
e) return of the fibre portion and the filler and pigment portion to the raw material preparation of the paper factory.

2. Process according to Claim 1, characterised in that for centrifuging, hydrocyclones are selected which have a nominal diameter of 10 to 100 mm, a material nozzle diameter of 7 to 14 mm and an underflow nozzle diameter of 2 to 8 mm.

3. Process according to Claims 1 and 2, characterised in that the inlet pressure on the feed side of the hydrocyclone(s) is selected to be between 0.5 and 6 bar.

4. Process according to one of Claims 1 to 3, characterised in that the black particle portion separated out in the hydrocyclones is subjected to an additional fine screening with a screen mesh size of > 25 µm, and the screen underflow is fed to the material portion.

5. Process according to one of Claims 1 to 3, characterised in that the suspension to be centrifuged is additionally aerated/charged with gas, before delivery to the hydrocyclone(s).

6. Process according to Claim 4, characterised in that the air/gas portion of the suspension is adjusted to 0 to 45% by volume.

7. Process according to Claim 1, characterised in that in order to divide up the agglomerate portion, the latter is treated with an energy of 0.2 to 3 kwh/m³ suspension.

8. Process according to Claim 1, characterised in that for the fractionated fine screening for separating out the fibres, screens having a hole or mesh size of 80 to 300 µm are selected, and for separating out the agglomerates, screens having a mesh size of > 45 µm are selected.

9. Process according to Claim 1, characterised in that the separated filler and pigment portion is divided up by means of known flotation processes into kaolin-containing, oxidic and carbonate-containing pigments.

10. Process according to Claim 1, characterised in that the fibre, filler and pigment portions are subjected, singly or together, to a bleaching and conservation treatment by means of the addition of oxidising bleaching agents.

## Revendications

1. Procédé de récupération de matières premières pour la fabrication de papier et de produits cartonnés dans les boues résiduaires d'une installation d'épuration mécanique ou d'un dispositif de séparation avec séparation en une partie riche en fibres et une partie riche en matières de remplissage, caractérisé par la combinaison des caractéristiques suivantes:
a) réglage de la teneur en matières solides de la boue légère à une valeur comprise entre 1 et 5 % en poids par addition d'eau résiduaire épurée mécaniquement et préparation d'une suspension homogénéisée,
b) élimination de la fraction d'impuretés grossières au moyen d'un tamis avec une ouverture de maille comprise entre 1 et 2 mm,
c) séparation de la fraction de particules noires > 10 µm par centrifugation dans un ou plusieurs hydrocyclones branchés en parallèle ou l'un derrière l'autre,
d) filtrage fin fractionné de la fraction récupérée du/des hydrocyclone(s) avec répartition en fraction de matières fibreuses, fraction de matières agglomérées et fraction de matières de remplissage et de pigments,
e) recyclage de la fraction de matières fibreuses et de la fraction de matières de remplissage et de pigments dans le traitement des matières premières de la fabrique de papier.

2. Procédé selon la revendication 1, caractérisé par le fait que l'on utilise pour la centrifugation des hydrocyclones avec un diamètre nominal compris entre 10 et 100 mm, un diamètre de buse pour les produits à récupérer compris entre 7 et 14 mm et un diamètre de buse de soutirage compris entre 2 et 8 mm.

3. Procédé selon les revendications 1 et 2, caractérisé par le fait que la pression d'entrée côté chargement de l'hydrocyclone / des hydrocyclones est comprise entre 0,5 et 6 bars.

4. Procédé selon l'une des revendications 1 à 3, caractérisé par le fait que l'on soumet la fraction de particules noires séparée dans les hydrocyclones à un filtrage fin supplémentaire avec une ouverture de maille > 25 µm et que l'on ajoute le filtrat à la fraction récupérée.

5. Procédé selon l'une des revendications 1 à 3, caractérisé par le fait que l'on aère/injecte un gaz dans la suspension à centrifuger avant son chargement dans le/les hydrocyclone(s).

6. Procédé selon la revendication 4, caractérisé par le fait que l'on règle la proportion d'air/de gaz de la suspension à une valeur comprise entre 0 et 45 % en volume.

7. Procédé selon la revendication 1, caractérisé par le fait que pour fragmenter la fraction de matières agglomérées on traite celle-ci avec une énergie comprise entre 0,2 et 3 kWh/m³ de suspension.

8. Procédé selon la revendication 1, caractérisé par le fait que pour le filtrage fin fractionné, destiné à séparer les fibres, on utilise des tamis avec une ouverture de trou ou de maille comprise entre 80 et 300 µm et que pour la séparation des matières agglomérées on utilise des tamis avec une ouverture de maille > 45 µm.

9. Procédé selon la revendication 1, caractérisé par le fait que par des procédés de flotation connus on subdivise la fraction séparée de matières de remplissage et de pigments en pigments contenant du kaolin, pigments contenant des oxydes et en pigments contenant des carbonates.

10. Procédé selon la revendication 1, caractérisé par le fait que l'on soumet les fractions de fibres, de matières de remplissage et de pigments, séparément ou ensemble, à un traitement de blanchiment et de conservation par addition d'agents de blanchiment oxydants.
